# EUROPEAN PATENT SPECIFICATION

(11) **EP 0 629 889 B1**
(45) Date of publication and mention of the grant of the patent: **22.10.1997**
(21) Application number: 94850082.2
(22) Date of filing: 17.05.1994
(51) Int. Cl.: G02B 6/44

(54) **Optical cable design**
Optisches Kabel
Câble optique

(30) Priority: 17.06.1993 SE 9302093
(43) Date of publication of application: 21.12.1994
(73) Proprietor: TELIA AB, 126 80 Farsta (SE)
(72) Inventor: Serrander, Hans, SE-116 35 Stockholm (SE); Ekblad, Anders, SE-161 45 Bromma (SE)
(74) Representative: Karlsson, Berne

(56) References cited:
- EP-A- 0 428 036
- EP-A- 0 459 688
- WO-A-92/01962
- DE-A- 3 232 108
- FR-A- 2 428 849
- PATENT ABSTRACTS OF JAPAN vol. 15, no. 67 (P-1167) 1991 & JP-A-02 289 804 (SUMITOMO ELECTRIC)
- PATENT ABSTRACTS OF JAPAN vol. 17, no. 228 (P-1531) 1993 & JP-A-04 358 106 (FUJIKURA LTD)

## Description

### FIELD OF THE INVENTION

The present invention relates to an optical cable of the kind specified in the preamble of claim 1. The cable design is intended for small optical cables, of the type including subscriber cables or cables for use in a thinly populated area. By virtue of a novel design, a combination cable is obtained which can be used for air, ground, channelling and indoor installations. The cable design comprises suitable reinforcing elements which, if necessary, can be removed for obtaining flexibility.

### PRIOR ART

Typical known optical cable designs are adapted to the laying environments for which they are intended, for example air cables or ground cables. The design differences are due to the fact that different characteristics of cable designs have set the tone. For example, in ground laying, the aim has been to make the cable resistant to clamping damage, and the aim for air cables has been a self-supporting design.

Present types of optical cables add technically very advanced trace elements which make the cables stiff and awkward for domestic installation.

For air cables, round cables with non-metallic strain relief elements of KEVLAR™ and trace elements with strain relief elements of fibre-reinforced plastic have been used, on the one hand, and figure-8 cables with supporting strains of steel or KEVLAR, on the other hand. These cables are also stiff and unsuitable for domestic installations and also unsuitable for ploughing in ground laying due to the fact that elongations can arise in the optical cable part.

US 4,188,088 shows a number of embodiments of optical elements for use in optical transmission. Figures 4, 5 and 7, especially, show optical elements in the form of two optical fibres which are diametrically connected to a reinforcing element 6, for example a sythetic fibre with a high modulus of elasticity or a metal, by means of jacketing 8 of the same material which surrounds the optical fibres 1 and the strain relief element 6. The optical fibres thus surround the strain relief element 6. In this design, there is a risk of elongation and clamping of the optical cable parts since they are located outside the strain relief element, for example with spiral twisting of the cable and clamping of the cable.

US 4,763,983 describes an optical cable in which nylon-covered optical fibres 14 together with a fibre-reinforced centre element 12, a soft polypropylene yarn layer 16 and rubber tape 18 are connected to a support element 22 by means of a jacketing 24.

WO-A1 83/3494 calls to mind th objects in US 4,783,983 but in this case deals with an electrical cable.

US 4,729,628 relates to a fibre-optical drop wire. Two reinforcing elements are placed on each side of the optical fibre in a relatively heavy common jacket.

US 5,180,890 describes a communication transmission cable in which, in Figure 2, two reinforcing elements 14 diametrically surround two electrical conducter pairs 12 with enveloppe 32.

US 4,815,814 decribes different embodiments of flat cable assemblies for laying under carpets.

US 4,761,053 relates to cables for outdoor antennas. Two reinforcing elements are placed on each side of the conductor in a common jacket.

US 4,993,795 and US 4,776,664 describe optical telephone lines comprising an optical telephone cable connected to a support cable 3 by means of jacketing 20 and, respectively, without jacketing.

US 4,199,225 deals with optical conductors in which optical fibres 22, combined by means of flexible plastic tape 21, 31, 33 in the form of optical-fibre ribbon, lie baked-in together with two strain relief elements of steel 62 in an extruded plastic body 61.

US 4,690,499 shows an optical fibre element accommodated in a tube.

US 4,420,220 and US 4,089,585 describe optical conductors of similar construction.

US 4,185,887 and US 4,054,365 show an optical fibre cable which can consist of a number of fixed composite ribbons 1 or, respectively, supports 26, each of which comprises an optical fibre 3 or, respectively, 18, and strain relief elements 5 and, respectively, 36.

EP 0 286 349 relates to an optical fibre cable with a core 21 which accommodates at least one optical fibre 24 and two diametrically placed reinforcing elements 42.

WO-A 92/01962 discloses an optical cable part with two strain relief elements being placed diametrically with respect to one another on each side of the optical cable part, and the strain relief elements are combined with the optical cable part by means of the jacketing.

EP-A 0 459 688 discloses an optical cable with strain relief elements comprising metal elements, and the strain relief elements and the optical cable part have outer diameters of the same size, and the strain relief elements can be cut or separated from the other portions.

### SUMMARY OF THE INVENTION

According to the present invention, a cable of the kind specified in the preamble of claim 1 includes the features specified in the characterizing portion of that claim.

The present invention thus provides an optical cable design which comprises an optical cable part and two strain relief elements. According to the invention, the strain relief elements are placed diametrically with respect to one another on each side of the optical cable part and are combined with the optical cable part by means of jacketing in one piece with the jacketing of the strain relief elements and optical cable part.

The strain relief elements include metal elements which can also be used as current feeding elements.

The invention is specified in greater detail in the patent claims which follow.

### BRIEF DESCRIPTION OF THE DRAWINGS

The invention will now be described in detail with reference to the attached drawing, the single figure of which shows a cross section through a cable design in accordance with an embodiment of the invention.

### DETAILED DESCRIPTION OF PREFERRED EMBODIMENTS

The present invention thus relates to a small-dimension combination cable for optical fibres which can be used both for air, ground, channelling and indoor installations. The design provides effective protective characteristics in spite of its simplicity.

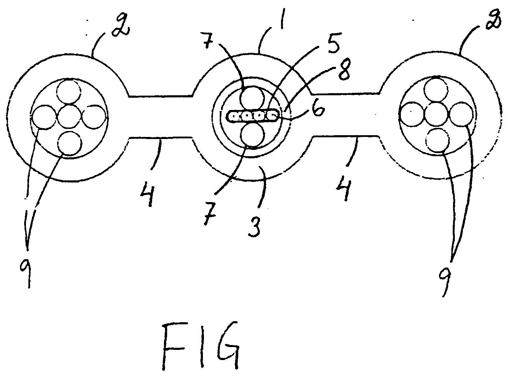

Figure 1 shows in cross section an optical cable design in accordance with a preferred embodiment of the invention. The cable comprises an optical cable part 1 and two strain relief elements 2. They have a common jacket 3 so that the strain relief elements 2 are connected to the optical cable part 1 by links of jacket material 4. This cable shape is frequently called a double figure 8. The strain relief thus consists of two separate strain relief elements which are located diametrically symmetrical with respect to one another on each side of the optical cable. They are combined with the optical cable part through a jacketing of the same material and in the same operation as the jacketing of the optical cable and strain relief elements.

The optical cable part is constituted by a number of optical fibres. The optical fibres are normally four pieces which are collected in an optical ribbon cable 5 with four optical fibres 6. Expansion ribbons 7 are placed on each side of the optical ribbon cable 5. The cable body is finally taped with a longitudinally applied polyester ribbon 8.

A conventional optical ribbon cable 5 has a width of approximately 1.5 mm and a height of 0.4 mm. It is also possible to accommodate three optical ribbon cables with four optical fibres each in the optical cable part 1. These three optical ribbon cables are then placed on top of one another and a height of 1.2 mm is obtained. No expansion ribbon is therefore needed in this case.

The strain relief elements 2 comprise metallic elements 9. They can then be used as current feeding elements for shorter distances.

Due to the design in a so-called double figure 8 solution, the cable is given such characteristics that it can be used as an air cable by suspending it, on the one hand, and, on the other hand, can be run in the ground by ploughing. It is important that the optical cable part has the same size as both strain relief elements in order thereby to obtain an effective protection against clamping and strain effects. In the case of suspension, the cable can be twisted without the optical cable part in the centre being subjected to any significant elongation. In the case of clamping, the side elements protect the optical cable part.

In the case of indoor installation, the cable can be made flexible and easily handled by simply cutting out the strain relief elements. If better guying is desired, one strain relief element can be kept.

In the case of drawing in channelling, torsion is prevented from occuring in the cable due to its shape, since it will lie flat during drawing.

In the case of suspension on posts, double clamping hooks are used, and in the case of twisting, the optical cable part will land in the centre and not loop around the strain relief element as in the case of a single figure 8 cable.

Due to the fact that there are double strain relief elements, one can be cut, for example in connection with earthing, without the cable being exposed to bending and strain effects since the remaining strain relief element provides guying.

The present invention thus solves the problem of strain relief of optical cables, especially in the case of small optical cables of the type including subscriber cables or cables for use in sparsely populated areas in which the more expensive standard cable with characteristics which are better per se are unnecessarily costly. The scope of the invention is limited only by the claims which follow.

## Claims

1. Optical cable comprising an optical part (1) and strain relief elements (2) which comprise metal elements (9), wherein the strain relief elements (2) are joined to the optical part (1) by a single jacketing (3, 4) enclosing the strain relief elements (2) as well as the optical part (1), **characterized** in that the optical cable is a ribbon-type cable wherein two strain relief elements (2) are placed on diametrically opposite sides of the optical part (1), each strain relief element (2) being connected to the optical part (1) through a link (4) of jacket material so that the optical cable has a double-eight cross section, and in that the outer diameters of the jacketed strain relief elements (2) and of the jacketed optical part (1) are of the same size.

2. Optical cable according to claim 1 **characterized** in that the optical part (1) comprises an optical ribbon cable (5) with four optical fibres (6), two expansion ribbons (7) and a taping of polyester ribbon (8).

3. Optical cable according to claim 1 **characterized** in that the optical part (1) comprises three optical ribbon cables (5) each with four optical fibres (6) and a taping of polyester ribbon (8).

4. Optical cable according to any of claims 1 - 3 **characterized** in that one or both of the jacketed strain relief elements (2) can be cut off from the jacketed optical part (1).

## Patentansprüche

1. Optisches Kabel, das einen optischen Teil (1) und Spannungsentlastungselemente (2) aufweist, die Metallelemente (9) aufweisen, wobei die Spannungsentlastungselemente (2) mit dem optischen Teil (1) durch eine einzige Ummantelung (3, 4) verbunden sind, die die Spannungsentlastungselemente (2) und auch den optischen Teil (1) umschließt, dadurch gekennzeichnet, daß das optische Kabel ein Kabel vom Bandtyp ist, bei dem zwei Spannungsentlastungselemente (2) an diametral gegenüberliegenden Seiten des optischen Teils (1) angeordnet sind, wobei jedes Spannungsentlastungselement (2) mit dem optischen Teil (1) durch ein Verbindungselement (4) von Mantelmaterial verbunden ist, so daß das optische Kabel den Querschnitt einer doppelten Acht aufweist, und daß die äußeren Durchmesser der ummantelten Spannungsentlastungselemente (2) und des ummantelten optischen Teils (1) von derselben Größe sind.

2. Optisches Kabel nach Anspruch 1, dadurch gekennzeichnet, daß der optische Teil (1) ein optisches Bandkabel (5) mit vier optischen Fasern (6), zwei Ausdehnungsbändern (7) und einer Umwicklung aus Polyesterband (8) aufweist.

3. Optisches Kabel nach Anspruch 1, dadurch gekennzeichnet, daß der optische Teil (1) drei optische Bandkabel (5) jeweils mit vier optischen Fasern (6) und eine Umwicklung aus Polyesterband (8) aufweist.

4. Optisches Kabel nach einem der Ansprüche 1 bis 3, dadurch gekennzeichnet, daß eines oder beide der ummantelten Spannungsentlastungselemente (2) von dem ummantelten optischen Teil (1) abschneidbar sind.

## Revendications

1. Câble optique comprenant une partie optique (1) et des éléments de reprise de contrainte (2) constitués par des éléments en métal (9), dans lequel les éléments de reprise de contrainte (2) sont reliés à la partie optique (1) par un chemisage unique (3,4) entourant les éléments de reprise de contrainte (2) ainsi que la partie optique (1), caractérisé en ce que le câble optique est un câble de type ruban dans lequel deux éléments de reprise de contrainte (2) sont placés sur des côtés diamétralement opposés de la partie optique (1), chaque élément de reprise de contrainte (2) étant relié à la partie optique (1) par une jonction (4) en matière de chemisage d'une manière telle que le câble optique a une section transversale en double huit, et en ce que les diamètres extérieurs des éléments de reprise de contrainte chemisés (2) et de la partie optique chemisée (1) sont de la même dimension.

2. Câble optique suivant la revendication 1, caractérisé en ce que la partie optique (1) comprend un câble à ruban optique (5) contenant quatre fibres optiques (6), deux rubans d'expansion (7) et un guipage de ruban de polyester (8).

3. Câble optique suivant la revendication 1, caractérisé en ce que la partie optique (1) comprend trois câbles à ruban optiques (5) comportant chacun quatre fibres optiques (6) et un guipage de ruban de polyester (8).

4. Câble optique suivant une quelconque des revendications 1 à 3, caractérisé en ce qu'on peut couper et séparer de la partie optique chemisée (1) un des éléments de reprise de contrainte chemisés (2) ou les deux.
